# FASCICULE DE BREVET EUROPEEN

(11) **EP 2 565 134 B1**
(45) Date de publication et mention de la délivrance du brevet: **15.10.2014**
(21) Numéro de dépôt: 12180777.0
(22) Date de dépôt: 17.08.2012
(51) Int. Cl.: B65G 1/02, E01F 15/14

(54) **Structure de protection d'un système de rayonnage**
Rammschutz für eine Säule eines Lagerregals
Storage rack column protector

(30) Priorité: 02.09.2011 FR 1157794
(43) Date de publication de la demande: 06.03.2013
(73) Titulaire: Ecolog Innovation, 62110 Hénin-Beaumont (FR)
(72) Inventeur: Cuvelier, Damien, 59000 Lille (FR); Liers, Christian, 62880 Vendin Le Vieil (FR)
(74) Mandataire: Balesta, Pierre

(56) Documents cités:
- DE-U1- 29 510 388
- FR-A1- 2 419 385
- US-A1- 2009 134 289

## Description

### Domaine technique

L'objet de la présente invention a trait au domaine des structures porteuses, et plus particulièrement au domaine des systèmes de rayonnage, et notamment les systèmes de rayonnage que l'on peut retrouver dans les entrepôts de stockage tels que les entrepôts dédiés à la logistique des marchandises.

Plus précisément, l'objet de la présente invention a trait au domaine des systèmes de protection pour la protection des montants ou échelles de tels systèmes de rayonnage.

L'objet de la présente invention trouve ainsi de nombreuses applications avantageuses dans les domaine de la logistique en permettant de consolider et rigidifier les systèmes de rayonnage qui sont dans les entrepôts de stockage, et dont les montants sont généralement soumis à de nombreux chocs et de nombreuses contraintes, notamment lors des chargements et déchargements de ces rayonnages.

Par système de rayonnage au sens de la présente invention, on entend toute structure porteuse permettant le rayonnage, le stockage et/ou l'entreposage de marchandises. De tels systèmes de rayonnage au sens de la présente invention comportent une surface utile sur laquelle peuvent être positionnées les marchandises et/ou les palettes sur lesquelles sont placées les marchandises, et au moins un montant.

Par montant au sens de la présente invention, on entend toute pièce d'un système de rayonnage ayant pour fonction de permettre une édification verticale d'un tel système. Ainsi, parmi les montants au sens de la présente invention, on compte notamment les pièces du type par exemple échelle, montant, pied ou toute autre pièce équivalente permettant une édification verticale d'un système de rayonnage.

### Etat de la technique

Dans les entrepôts de stockage dédiés à la logistique, les marchandises ou palettes de marchandises sont généralement stockées et entreposées sur des systèmes de rayonnage classiques, de tels systèmes de rayonnage pouvant prendre par exemple la forme d'une étagère.

Les sociétés de logistique en charge de la gestion et de la préparation de ces marchandises doivent planifier et organiser le transport, le stockage, et/ou l'acheminement de l'ensemble de ces marchandises.

Pour le chargement et le déchargement de ces marchandises, des véhicules tels que des engins motorisés du type chariot élévateur ou chariot de convoyage ou retract viennent prendre ou déposer les marchandises ou les palettes de marchandises sur les supports de stockage des systèmes de rayonnage.

Lors de ces chargements et de ces déchargements, ces véhicules viennent généralement à proximité des systèmes de rayonnage, et notamment à proximité des montants, pour venir charger ou déposer ces marchandises.

Bien souvent, les caristes qui conduisent ces véhicules viennent percuter les montants des systèmes de rayonnage, ceci a pour effet de venir déstabiliser, voire abîmer les montants. En effet, ces chocs, de plus ou moins forte intensité, sont réguliers, et ont des conséquences néfastes à long terme sur la solidité des systèmes de rayonnage.

Il existe dans l'état de la technique une solution classique et bien connue qui est particulièrement adaptée à ce type de problématique visant à protéger les montants contre de tels chocs.

Une telle solution de protection est apportée par un sabot de protection qui est fixé au sol et qui vient couvrir au moins partiellement la portion inférieure du montant en sorte d'éviter que l'engin motorisé ne vienne directement en contact avec le ou les montants du système de rayonnage.

De tels sabots sont bien connus de l'état de la technique et sont commercialisés notamment par la société « DUWIC® » qui propose un tel sabot. On retrouve également de tels sabots dans les documents US 5 369 925 et WO 2005 103 389.

Toutefois, la demanderesse constate qu'en entrepôt, de tels sabots sont extrêmement déformés, et vont même après plusieurs mois d'utilisation jusqu'à être en contact directement avec les montants qu'ils sont censés protéger.

Dans ce cas, le moindre choc engendré par un chariot élévateur sur un sabot ainsi déformé, par exemple lors d'un chargement ou d'un déchargement d'une palette ou lors de la circulation du chariot dans une allée de l'entrepôt, est transmis intégralement au montant.

Généralement les montants sont constitués d'un métal de relativement faible épaisseur et présentant une faible capacité de résistance élastique, ce qui provoque, lors du moindre choc, une fissure ou une déformation permanente du montant.

Une telle fissure ou une telle déformation nécessite un remplacement total de la structure pour éviter sa destruction par le phénomène de flambage (sollicitation mécanique combinée de flexion et compression).

Une telle fissure ou une telle déformation peut en outre entraîner l'effondrement partiel voire total du rayonnage, ce qui implique une détérioration de la marchandise et d'éventuels accidents pour les caristes.

Pour permettre la fixation de tels sabots au sol, la demanderesse soumet qu'il est généralement prévu sur les sabots des ouvertures circulaires pour le passage d'éléments longilignes filetés qui sont enfoncés dans le sol, ces éléments filetés nécessitant des trous dans le sol pour y être chevillés. De telles ouvertures sont visibles notamment sur les figures du document US 5 369 925.

La demanderesse soumet toutefois que, pour résister aux chocs et éviter tout effondrement et toute déformation, il n'existe pas de normes particulières. De plus, les règles de montage de tels systèmes de rayonnage ne sont pas toujours respectées.

En conséquence, ce type de fixation n'est pas solide, et ne résiste pas aux chocs violents et répétés dans le temps de sorte que, lorsqu'un choc sur le sabot provoque le basculement du sabot en plus de sa déformation, ce basculement entraîne un arrachement des points de fixation et un cisaillement des éléments filetés.

La demanderesse a constaté qu'après un tel arrachement, les trous dans le sol ne sont plus réutilisables : il n'existe pas de chevilles adaptées pour résister à ce niveau de contraintes. Dans ce cas, il est nécessaire de refaire d'autres trous dans le sol et de décaler l'ensemble du système de rayonnage, ce qui n'est pas concevable dans les entrepôts avec des systèmes de rayonnage déjà pré-dimensionnés.

Alternativement, il existe dans l'état de la technique d'autres solutions visant à permettre la protection contre les chocs des montants pour système de rayonnage.

Les documents WO 2005 075 745 et WO 2005 049 453 divulguent chacun un système amortisseur présentant une forme sensiblement cylindrique et longiligne, qui entoure le montant, et qui est constitué dans un matériau plastique.

Le document US 2001 0047975 divulgue un système sensiblement similaire qui consiste en une bande longiligne amortissante couvrant une face de chaque montant et s'étendant sur toute la hauteur de chaque montant.

Le document FR 2 419 385 divulgue pour sa part un butoir se plaçant à l'avant d'un support, tel qu'un montant, l'intérieur du butoir pouvant être capitonné, par exemple par une bande caoutchouc. DE 295 10 388 U1 correspond au préambule de la revendication 1.

En tout état de cause, la demanderesse soumet que les différentes solutions techniques envisagées dans l'état de la technique ne proposent pas de système de protection satisfaisant qui fournit une protection qui résiste dans le temps et qui évite les différents inconvénients soulevés ci-dessus.

La demanderesse observe donc un défaut manifeste en matière de système de protection pour montant : l'état de la technique ne propose pas de solution industrielle simple et adaptable aux structures déjà existantes et permettant une bonne protection des montants tout en réduisant les coûts et en répondant à une contrainte environnementale.

### Résumé de l'objet de la présente invention

L'objet de la présente invention est d'apporter une solution simple et efficace aux problèmes précités parmi d'autres problèmes, les problèmes liés au coût et à la fabrication étant bien évidemment pris en considération dans le cadre de la présente invention.

Un des problèmes techniques que résout l'objet de la présente invention consiste donc à proposer une solution visant la conception et la fabrication d'une structure de montant qui offre aux systèmes de rayonnage notamment une bonne résistance aux chocs.

A cet effet, l'objet de la présente invention porte sur une structure de montant, selon la revendication 1, permettant de limiter les contraintes exercées sur un montant d'un système de rayonnage lors d'un choc tel que par exemple un choc provoqué par un chariot de convoyage ou un chariot élévateur, comme évoqué précédemment. Il s'avère en effet que de tels véhicules ont tendance à percuter les montants des systèmes de rayonnage pour venir au plus près d'eux.

Selon la présente invention, la structure de montant comporte ainsi :
- un montant tel que défini ci-dessus,
- un sabot de protection qui est destiné à être fixé directement ou indirectement au sol, et qui est configuré pour couvrir au moins partiellement une portion inférieure d'au moins une des faces du montant, et
- un absorbeur qui est positionné entre le sabot de protection et le montant Le montant, selon la présente invention, est creux, la structure de montant selon la présente invention comporte ainsi au moins un moyen de rigidification constitué d'un profilé longiligne creux encapsulé dans une gaine en caoutchouc, le moyen de rigidification étant positionné à l'intérieur du montant pour rigidifier le montant.

Dans une variante de réalisation de la présente invention, ce moyen de rigidification est configuré pour venir en contact intime avec toute ou partie d'au moins une paroi intérieure dudit montant.

Cette interposition d'un absorbeur entre le sabot de protection et le montant permet d'absorber de façon significative les ondes de chocs et les contraintes qui sont reçues par le sabot de protection, et qui dans l'état de la technique sont transmises directement au montant et aux autres éléments constitutifs de la structure.

En d'autres termes, ce positionnement spécifique permet de diminuer de façon significative toutes les contraintes et les déformations subies par un montant suite à un choc.

Avec l'adjonction d'un tel absorbeur ainsi positionné entre le sabot de protection et le montant, la demanderesse a observé une diminution par deux de ces contraintes et de ces déformations.

Cette configuration spécifique du moyen de rigidification permet d'obtenir des résultats significatifs en termes de consolidation de montant.

De préférence, chaque profilé est constitué au moins partiellement en acier.

Avantageusement, l'absorbeur selon la présente invention est en contact intime avec le sabot de protection et/ou le montant.

Avantageusement, l'absorbeur selon la présente invention est constitué au moins partiellement en caoutchouc. De préférence, le caoutchouc utilisé est un caoutchouc recyclé.

De préférence, le caoutchouc présente une dureté Shore de 80 au maximum.

Avantageusement, l'absorbeur selon la présente invention comporte :
a) une première face, dite face intérieure, configurée pour épouser au moins partiellement le profil extérieur du montant, et
b) une deuxième face, dite face extérieure, dont au moins une portion est en contact intime avec le profil intérieur du sabot de protection.

Cette configuration spécifique de l'absorbeur permet d'avoir une très bonne capacité d'absorption des ondes de chocs, et offre donc une meilleure résistance aux chocs.

De préférence, cette deuxième face présente un profil complexe.

Selon une variante de réalisation préférée de la présente invention, la deuxième face de l'absorbeur comporte au moins un élément d'absorption qui est en protrusion et qui s'étend longitudinalement au moins sur toute ou partie de la hauteur du sabot de protection.

Cette configuration avantageuse permet d'absorber le maximum d'énergie provoquée par l'onde de choc qui se propage dans la structure de montant.

Avantageusement, chaque élément d'absorption présente une forme, des dimensions et des angles qui ont été sélectionnés dans le but de permettre une absorption optimale du choc. Ces éléments d'absorption en protrusion forment ainsi des rainures qui sont orientées parallèlement au plan de symétrie du sabot ; cette orientation correspond à la direction principale des ondes de choc et permet une absorption optimale.

Avantageusement, les éléments d'absorption sont parallèles les uns aux autres.

Dans une variante de réalisation de la présente invention, l'absorbeur qui est constitué au moins partiellement en caoutchouc est obtenu par vulcanisation à chaud et sous pression d'une poudre de caoutchouc telle que par exemple une poudre de caoutchouc issue d'un recyclage de pneumatiques.

Bien évidemment, tout autre type de caoutchouc équivalent ayant les mêmes propriétés absorbantes peut être utilisé dans le cadre de la présente invention.

Dans un mode particulier de réalisation de la présente invention, le sabot de protection comporte un bouclier de protection qui est configuré pour protéger la portion inférieure du montant, et un socle de fixation plan qui est destiné à être fixé directement ou indirectement au sol et qui est configuré pour fixer ledit sabot de protection au sol.

Dans ce mode, selon la présente invention, le socle de fixation comporte au moins un trou traversant oblong, un tel trou permettant le passage d'un élément de fixation fileté pour la fixation dudit socle.

La demanderesse soumet que cette forme spécifique du trou permet d'éviter le phénomène de cisaillement des éléments filetés observé dans l'état de la technique.

Cette caractéristique avantageuse est particulièrement intéressante pour assurer une bonne fixation au sol et éviter tout arrachement ou cisaillement tel que mentionné ci-dessus.

Corrélativement, l'objet de la présente invention porte sur un système de rayonnage comportant :
- au moins un support de stockage apte à recevoir et à stocker des marchandises et/ou des palettes de marchandises, et
- une pluralité de montants pour l'édification dudit système de rayonnage.

Avantageusement, au moins un des montants de ce système de rayonnage présente une structure de montant telle que décrite ci-dessus.

Ainsi, l'objet de la présente invention par ses différentes caractéristiques techniques structurelles et fonctionnelles, et notamment par l'utilisation d'un absorbeur, de trous traversants oblongs, et d'un moyen de rigidification, permet la consolidation et la protection contre les chocs des montants d'un système de rayonnage, cet agencement spécifique des différentes caractéristiques énoncées ci-dessus répondant aux différentes problématiques énoncées ci-dessus, et assurant une bonne solidité dans le temps.

### Brève description des figures

D'autres caractéristiques et avantages de la présente invention ressortiront de la description ci-dessus en faisant référence aux figures **1** à **4** annexées qui illustrent un exemple de réalisation dépourvu de tout caractère limitatif et sur lesquelles :
- la figure **1** représente de façon schématique une vue en perspective d'une structure de montant selon un exemple de réalisation avantageux de la présente invention ;
- la figure **2** représente de façon schématique une vue en perspective d'une structure de montant conforme à la figure **1** avec des moyens de rigidification ;
- la figure **3** représente de façon schématique une vue de dessus d'un exemple de réalisation d'un absorbeur conforme aux figures **1** et **2** **;** et
- la figure **4** représente de façon schématique une vue de dessus d'une structure de montant conforme à la figure **2**.

### Description détaillée d'un exemple de réalisation selon la présente invention

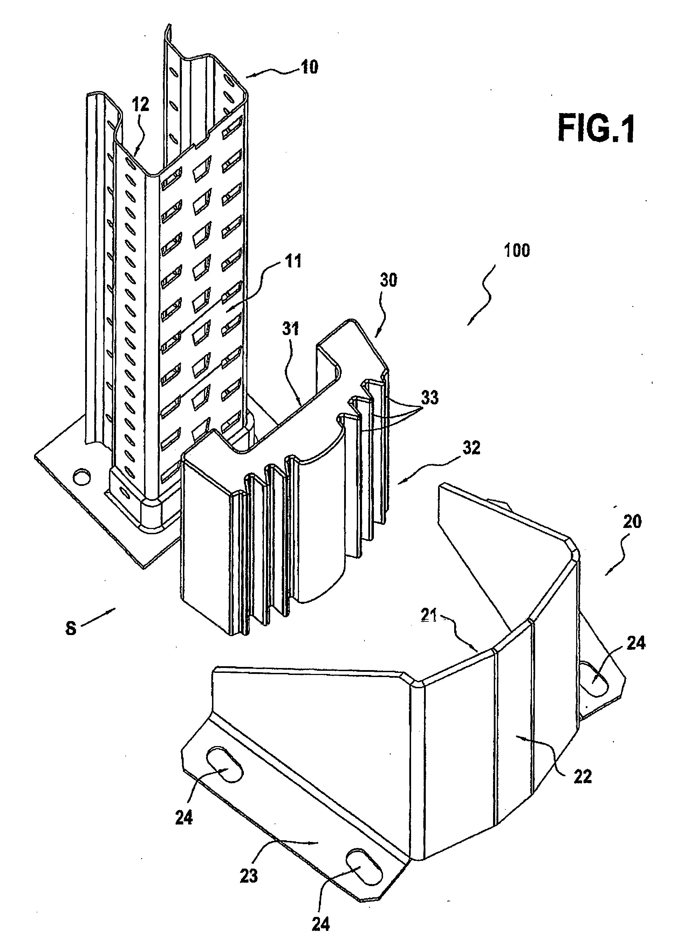

Une structure de montant conforme à un exemple de réalisation avantageux de la présente invention va maintenant être décrite dans ce qui suit en faisant référence conjointement aux figures **1** à **4****.**

Permettre la conception et la fabrication d'une structure de montant configurée pour éviter les différents inconvénients identifiés ci-dessus dans l'état de la technique est un des objectifs de la présente invention.

Un des objectifs de la présente invention consiste donc à chercher une protection pour les systèmes de rayonnage qui soit suffisamment efficace pour, par exemple, ne pas avoir à la remplacer à la suite d'un choc d'une intensité minimum de 400 Joules appliqué à une altitude maximum de 400 millimètres.

A titre informatif, un tel choc correspond à un choc engendré par un chariot de convoyage présentant une masse de 1400 kg percutant le système de rayonnage à une vitesse de 0.76 m/s. Cette norme est la seule connue à l'heure actuelle et ne s'applique qu'au sabot.

Le concept inventif sous-jacent à la présente invention est d'apporter une structure de montant configurée pour absorber et diffuser au maximum l'énergie libérée par un choc à un système de rayonnages, ceci afin de protéger efficacement les différents éléments qui la composent et notamment le montant.

A cet effet, dans l'exemple décrit ici, l'objet de la présente invention porte sur une structure de montant **100** permettant de limiter les contraintes exercées sur un montant **10** d'un système de rayonnage (non représenté ici).

De telles contraintes sont exercées notamment lors de chocs tels que par exemple ceux provoqués par un chariot de convoyage ou un chariot élévateur. Ces contraintes se matérialisent dans l'état de la technique notamment par la diffusion d'ondes de chocs qui se diffusent le long des systèmes de rayonnage et qui viennent déformer et/ou affaiblir les montants.

Dans l'exemple décrit, et de façon classique, la structure de montant **100** comporte un montant **10,** qui est creux. Généralement, les montants utilisés dans les entrepôts sont constitués d'un métal de faible épaisseur sensiblement égale à de l'ordre de 1.5 millimètres, et de faible capacité de résistance élastique (par exemple : Re = 240 MPa ou 240 N/mm²).

Permettre de renforcer la solidité d'un tel montant **10** est un des objectifs de la présente invention.

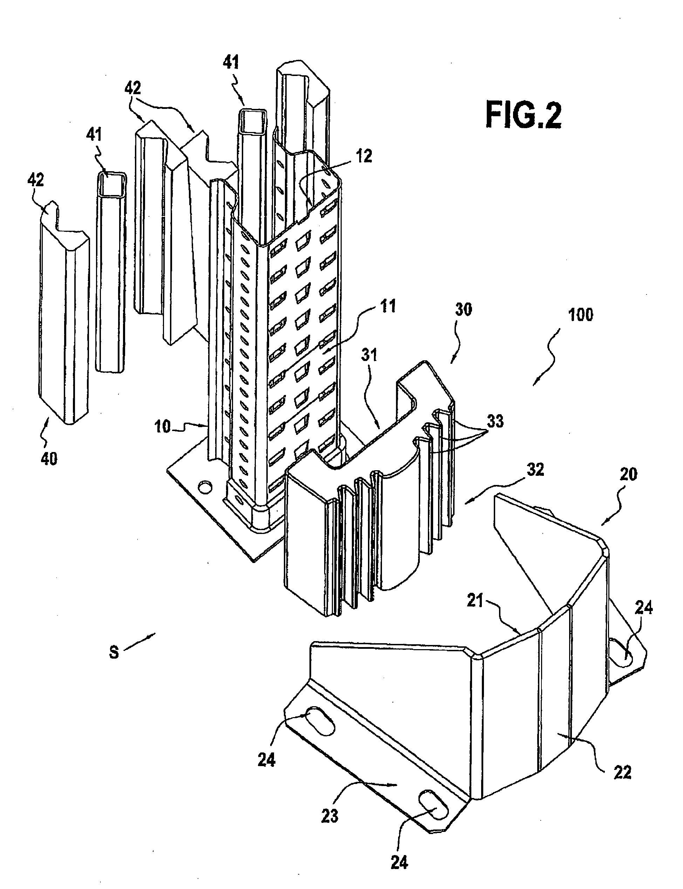

Dans l'exemple décrit ici, et comme illustré notamment aux figures **1** et **2****,** la structure de montant **100** selon la présente invention comporte ainsi un sabot de protection **20,** ce sabot de protection **20** étant caractéristique de la présente invention.

La demanderesse soumet que le sabot de protection **20** est réalisé dans une tôle d'acier de qualité supérieure à celle de la concurrence, sa limite élastique Re est supérieure de 50% à celle de la concurrence.

Le sabot de protection **20** est obtenu uniquement par pliage et sa forme lui permet de bien supporter des chocs dans sa partie supérieure.

Dans l'exemple décrit ici, le sabot de protection **20** comporte un socle de fixation **23** qui est plan et qui destiné à être fixé au sol **S.** Cette fixation du socle **23** avec le sol **S** se fait par l'intermédiaire d'éléments longilignes filetés (non représentés) qui sont enfoncés dans des trous prévus dans le sol **S.**

Selon un des premiers aspects de la présente invention, pour éviter le phénomène de cisaillement observé dans l'état de la technique, le socle de fixation **23** comporte une pluralité de trous traversants oblongs **24,** ces éléments longilignes filetés traversant ces trous **24.**

Ces trous **24,** par leur forme spécifique, sont aptes à absorber de façon significative les ondes de chocs provoquées par la percussion d'un chariot de convoyage, et donc de réduire les risques de cisaillement.

La demanderesse soumet que des tests en situation réelle ont montré que la structure de montant **100** selon la figure **1** comportant un socle de fixation **23** présentant de tels trous **24** pouvait supporter plus d'une dizaine de chocs très violents sans déformation des montants **10** et des fixations.

La demanderesse soumet en outre que, avec les mêmes tests effectués dans les mêmes conditions, les sabots vendus actuellement, sans trous traversant oblongs, sont détruits au premier choc, au mieux au troisième, avec endommagement du montant et arrachement des fixations.

Avantageusement, ces trous traversants oblongs **24** sont orientés parallèlement au plan de symétrie du sabot **20** qui est la direction prépondérante de la diffusion des ondes de chocs.

Cette forme spécifique et cette orientation des trous **24** semblent donc apporter de façon étonnante une amélioration conséquente pour augmenter l'absorption des chocs.

Dans l'exemple décrit ici, le sabot de protection **20** comporte un bouclier de protection **22** qui couvre une portion du montant pour protéger la portion inférieure du montant **10** contre les chocs ; plus précisément, le bouclier **22** est configuré pour couvrir au moins partiellement une portion inférieure d'au moins une des faces du montant **10.**

Le bouclier **22,** qui est connu de l'état de la technique, permet donc d'améliorer la protection du montant **10.**

La structure de montant **100** comporte un absorbeur **30** qui est constitué au moins partiellement en caoutchouc.

De préférence, par souci environnemental, l'absorbeur **30** est obtenu par vulcanisation à chaud et sous pression d'une poudre de caoutchouc, telle qu'une poudre de caoutchouc issue d'un recyclage de pneumatiques.

Selon un autre aspect technique, caractéristique de la présente invention, l'absorbeur est positionné entre le sabot de protection **20** et le montant **10.**

La demanderesse soumet que ce positionnement d'un absorbeur **30** permet de diminuer par deux les contraintes et les déformations subies par le système de rayonnage et notamment le ou les montants **10.** C'est le moyen le plus économique d'augmenter d'environ de 50 à 60% les capacités d'absorption des chocs du montant.

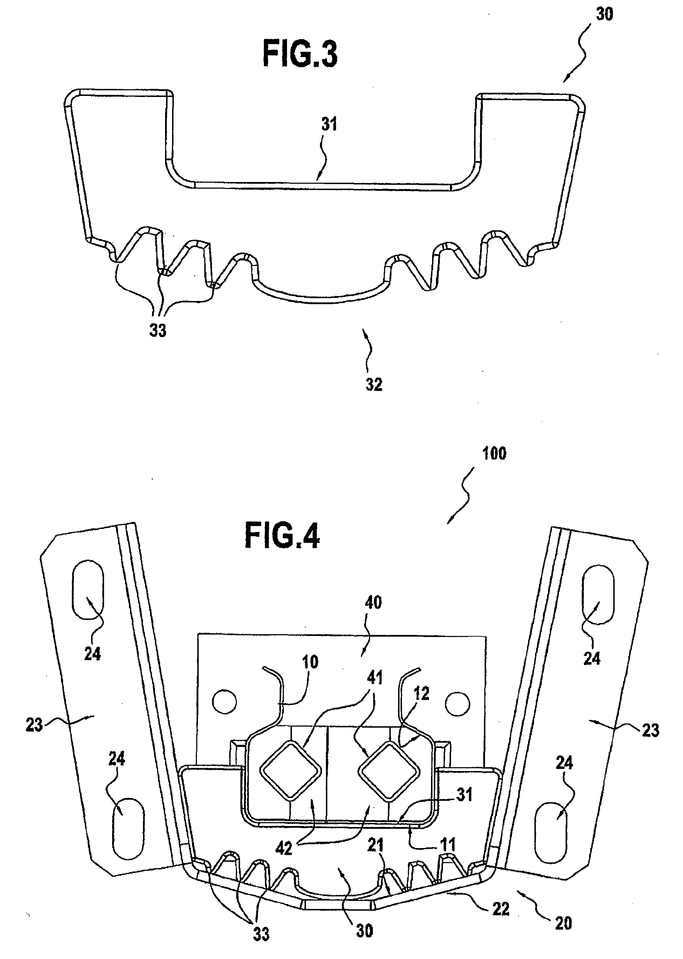

Dans l'exemple de réalisation décrit ici, et comme illustré notamment en figure **4****,** l'absorbeur **30** est en contact intime avec le sabot de protection **20** et le montant **10.**

Plus précisément, dans l'exemple décrit ici, l'absorbeur **30** comporte une première face **31** configurée pour épouser au moins partiellement le profil extérieur **11** du montant **10,** ce profil étant généralement rectiligne.

Dans l'exemple décrit ici, l'absorbeur **30** comporte en outre une deuxième face **32** dont au moins une portion est en contact intime avec le profil intérieur **21** du sabot de protection **20.**

La demanderesse soumet qu'il est prévu plusieurs formes d'absorbeur **30,** chaque forme pouvant s'adapter au profil extérieur du montant **10** et au profil intérieur du sabot de protection **20.** La demanderesse soumet notamment que le procédé de fabrication relativement simple à mettre en oeuvre permet de concevoir toutes les formes possibles.

Optimiser l'absorption des chocs est un des objectifs de la présente invention.

A cet effet, comme illustré notamment en figure **3****,** la deuxième face **32** de l'absorbeur **30** comporte une pluralité d'éléments d'absorption **33** en protrusion qui sont parallèles les uns des autres et qui s'étendent longitudinalement de telle manière que chaque élément d'absorption **33** s'étend sur toute la hauteur du sabot de protection **20** (voir également figure **1** ou **2**).

Ainsi, ces éléments d'absorption **33** forment des rainures dont la forme, l'angle, la profondeur et les dimensions garantissent l'absorption et la diffusion d'une partie du choc à dissiper. Comme illustré en figure **3****,** ce profil suit la forme intérieure du sabot **20** utilisé.

Dans l'exemple décrit ici, et comme illustré en figures **2** et **4****,** selon un autre aspect de la présente invention, la structure de montant **100** comporte deux moyens de rigidification **40** positionnés à l'intérieur du montant **10,** et configurés pour venir en contact intime avec toute ou partie d'au moins une paroi intérieure **12** du montant **10.**

Dans l'exemple décrit ici, chaque moyen de rigidification **40** comporte un profilé **41** longiligne creux encapsulé dans une gaine **42** moulée qui est en caoutchouc.

Après avoir réalisé une série de tests, la demanderesse observe que l'utilisation de ces moyens de rigidification **40** permet de diviser environ par deux les contraintes subies par le montant **10** pour un choc donné par rapport à l'absence de protection.

Aussi, grâce à ces différents aspects, il est possible de renforcer la protection des montants **10** des systèmes de rayonnage. Ainsi, selon la présente invention, la déformation élastique du sabot, l'écrasement de l'absorbeur en caoutchouc, la flexion du montant mais aussi par les déformations des traverses de liaison avec l'échelle arrière et les structures voisines en liaison, on obtient une diminution significative des déformations et des contraintes qui s'exercent sur les systèmes de rayonnage lors de chocs, les contraintes qui demeurent restant dans le domaine des déformations élastiques.

Les différentes solutions techniques apportées par la présente invention peuvent être combinées entre elles, et/ou peuvent être envisagées indépendamment les unes des autres.

La demanderesse observe également que les solutions apportées dans le cadre de la présente invention sont destinées à pouvoir s'adapter aux différentes structures déjà existantes de sorte que les gestionnaires de centre logistique peuvent facilement mettre en place la structure de montant et le système de protection proposés par la présente invention pour consolider les structures porteuses dans leurs entrepôts.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Structure de montant (100) permettant de limiter les contraintes exercées sur un montant (10) d'un système de rayonnage lors d'un choc tel que par exemple un choc provoqué par un chariot de convoyage, ladite structure (100) comportant un montant (10), un sabot de protection (20) destiné à être fixé directement ou indirectement au sol (S) et configuré pour couvrir au moins partiellement une portion inférieure d'au moins une des faces du montant (10), et un absorbeur (30) positionné entre le montant (10) et le sabot de protection (20), le montant (10) étant creux et comportant au moins un moyen de rigidification (40), la structure de montant étant **caractérisée en ce que** le moyen de rigidification est constitué d'un profilé (41) longiligne creux encapsulé dans une gaine (42) en caoutchouc, ledit moyen de rigidification (40) étant positionné à l'intérieur du montant (10) pour rigidifier ledit montant (10), et configuré pour venir en contact intime avec toute ou partie d'au moins une paroi intérieure dudit montant (10).

2. Structure de montant (100) selon la revendication **1, caractérisée en ce que** l'absorbeur (30) est constitué au moins partiellement en caoutchouc.

3. Structure de montant (100) selon la revendication **1** ou **2, caractérisée en ce que** l'absorbeur (30) est en contact intime avec le montant (10) et/ou le sabot de protection (20).

4. Structure de montant (100) selon l'une quelconque des revendications **1 à 3, caractérisée en ce que** l'absorbeur (30) comporte :
a) une première face (31) configurée pour épouser au moins partiellement le profil extérieur (11) du montant (10), et
b) une deuxième face (32) dont au moins une portion est en contact intime avec le profil intérieur (21) du sabot de protection (20).

5. Structure de montant (100) selon la revendication **4, caractérisée en ce que** la deuxième face (32) de l'absorbeur (30) comporte au moins un élément d'absorption (33) en protrusion s'étendant longitudinalement de telle manière que ledit au moins un élément d'absorption (33) s'étend sur toute ou partie de la hauteur du sabot de protection (20).

6. Structure de montant (100) selon la revendication **5, caractérisée en ce que** les éléments d'absorption (33) sont parallèles les uns des autres.

7. Structure de montant (100) selon la revendication **2** ou selon l'une quelconque des revendications **3 à 6** rattachée à la revendication **2, caractérisée en ce que** l'absorbeur (30) constitué au moins partiellement en caoutchouc est obtenu par vulcanisation à chaud et sous pression d'une poudre de caoutchouc, telle qu'une poudre de caoutchouc issue d'un recyclage de pneumatiques.

8. Structure de montant (100) selon l'une quelconque des revendications **1 à 7,** le sabot de protection (20) comportant : a) un bouclier de protection (22) configuré pour protéger la portion inférieure du montant (10), et b) un socle de fixation (23) plan destiné à être fixé directement ou indirectement au sol (S), **caractérisée en ce que** le socle de fixation (23) comporte au moins un trou traversant oblong (24).

9. Système de rayonnage comportant au moins un support de stockage (210) apte à recevoir et à stocker des marchandises et/ou des palettes de marchandises, et comportant une pluralité de montants (10) pour l'édification dudit système de rayonnage, **caractérisé en ce qu'**au moins un des montants (10) présente une structure de montant (100) selon l'une quelconque des revendications **1 à 8.**

## Patentansprüche

1. Pfostenstruktur (100), die ermöglicht, die Belastungen, die bei einem Stoß, wie zum Beispiel einem durch einen Transportwagen verursachten Stoß, auf einen Pfosten (10) eines Regalsystems ausgeübt werden, zu begrenzen, wobei die Struktur (100) einen Pfosten (10), einen Schutzschuh (20), der dazu bestimmt ist, direkt oder indirekt am Boden (S) befestigt zu werden, und dazu ausgebildet ist, einen unteren Abschnitt von wenigstens einer der Seiten des Pfostens (10) wenigstens teilweise abzudecken, sowie einen Dämpfer (30), der zwischen dem Pfosten (10) und dem Schutzschuh (20) angeordnet ist, umfasst, wobei der Pfosten (10) hohl ist und wenigstens ein Versteifungsmittel (40) umfasst, wobei die Pfostenstruktur **dadurch gekennzeichnet, dass** das Versteifungsmittel (40) von einem langgestreckten Hohlprofil (41), das in eine Hülle (42) aus Gummi eingekapselt ist, gebildet ist, wobei das Versteifungsmittel (40) innerhalb des Pfostens (10) angeordnet ist, um den Pfosten (10) zu versteifen, und dazu ausgebildet ist, mit wenigstens einer ganzen Innenwand des Pfostens (10) oder einem Teil dieser in innigen Kontakt zu kommen.

2. Pfostenstruktur (100) nach Anspruch 1, **dadurch gekennzeichnet, dass** der Dämpfer (30) wenigstens teilweise aus Gummi ausgebildet ist.

3. Pfostenstruktur (100) nach Anspruch 1 oder 2, **dadurch gekennzeichnet, dass** der Dämpfer (30) in innigem Kontakt mit dem Pfosten (10) und/oder dem Schutzschuh (20) ist.

4. Pfostenstruktur (100) nach einem der Ansprüche 1 bis 3, **dadurch gekennzeichnet, dass** der Dämpfer (30) umfasst:
a) eine erste Seite (31), die dazu ausgebildet ist, sich wenigstens teilweise an das Außenprofil (11) des Pfostens (10) anzuschmiegen, und
b) eine zweite Seite (32), von der wenigstens ein Abschnitt in innigem Kontakt mit dem Innenprofil (21) des Schutzschuhs (20) ist.

5. Pfostenstruktur (100) nach Anspruch 4, **dadurch gekennzeichnet, dass** die zweite Seite (32) des Dämpfers (30) wenigstens ein vorspringendes Absorptionselement (33) umfasst, das sich derart längs erstreckt, dass das wenigstens eine Absorptionselement (33) sich über die gesamte Höhe des Schutzschuhs (20) oder einen Teil derer erstreckt.

6. Pfostenstruktur (100) nach Anspruch 5, **dadurch gekennzeichnet, dass** die Absorptionselemente (33) parallel zueinander verlaufen.

7. Pfostenstruktur (100) nach Anspruch 2 oder nach einem der Ansprüche 3 bis 6, in Verbindung mit Anspruch 2, **dadurch gekennzeichnet, dass** der Dämpfer (30), der wenigstens teilweise aus Gummi ausgebildet ist, durch Heiß- und Druckvulkanisation eines Gummipulvers, wie eines aus einem Recycling von Reifen stammenden Gummipulvers, erhalten wird.

8. Pfostenstruktur (100) nach einem der Ansprüche 1 bis 7, wobei der Schutzschuh (20) umfasst: a) einen Schutzschild (22), der dazu ausgebildet ist, den unteren Abschnitt des Pfostens (10) zu schützen, sowie b) einen ebenen Befestigungssockel (23), der dazu bestimmt ist, direkt oder indirekt am Boden (S) befestigt zu werden, **dadurch gekennzeichnet, dass** der Befestigungssockel (23) wenigstens ein durchgehendes Langloch (24) umfasst.

9. Regalsystem, umfassend wenigstens einen Lagerträger (210), der geeignet ist, Waren und/oder Warenpaletten aufzunehmen und zu lagern, und umfassend eine Vielzahl von Pfosten (10) für die Errichtung des Regalsystems, **dadurch gekennzeichnet, dass** wenigstens einer der Pfosten (10) eine Pfostenstruktur (100) nach einem der Ansprüche 1 bis 8 aufweist.

## Claims

1. A leg structure (100) that makes it possible to limit the stresses exerted on a leg (10) of a shelving system during an impact, e.g. an impact caused by a handling cart, said structure (100) comprising a leg (10), a protective guard (20) for fastening directly or indirectly to the floor (S) and configured to cover at least part of a bottom portion of at least one of the faces of the leg (10), and an absorber (30) that is positioned between the leg (10) and the protective guard (20), the leg (10) being hollow and including at least one stiffener means (40), said leg structure being **characterized in that** the stiffener means (40) is constituted by a hollow elongate section member (41) that is encapsulated in a sheath (42) made of rubber, said stiffener means (40) being positioned inside the leg (10) so as to stiffen said leg (10) and being configured so as to come into intimate contact with all or part of at least one inside wall of said leg (10).

2. A leg structure (100) according to claim 1, **characterized in that** the absorber (30) is made of rubber, at least in part.

3. A leg structure (100) according to claim 1 or claim 2, **characterized in that** the absorber (30) is in intimate contact with the leg (10) and/or with the protective guard (20).

4. A leg structure (100) according to any one of claims 1 to 3, **characterized in that** the absorber (30) comprises:
a) a first face (31) that is configured to fit closely to at least part of the outside profile (11) of the leg (10); and
b) a second face (32) having at least one portion that is in intimate contact with the inside profile (21) of the protective guard (20).

5. A leg structure (100) according to claim 4, **characterized in that** the second face (32) of the absorber (30) includes at least one projecting absorber element (33) that extends longitudinally in such a manner that said at least one absorber element (33) extends over all or part of the height of the protective guard (20).

6. A leg structure (100) according to claim 5, **characterized in that** the absorber elements (33) are parallel to one another.

7. A leg structure (100) according to claim 2 or according to any one of claims 3 to 6 as dependent on claim 2, **characterized in that** the absorber (30) that is made of rubber, at least in part, is obtained by hot curing a rubber powder under pressure, such as a rubber powder resulting from tire recycling.

8. A leg structure (100) according to any one of claims 1 to 7, the protective guard (20) comprising:
a) a protective shield (22) that is configured to protect the bottom portion of the leg (10); and
b) a plane fastener base (23) for fastening directly or indirectly to the floor (S);
said leg structure being **characterized in that** the fastener base (23) includes at least one oblong through hole (24).

9. A shelving system including at least one storage support (210) that is suitable for receiving and for storing goods and/or pallets of goods, and including a plurality of legs (10) for erecting said shelving system, said shelving system being **characterized in that** at least one of the legs (10) presents a leg structure (100) according to any one of claims 1 to 8.
